# EUROPEAN PATENT APPLICATION

(11) **EP 4 635 815 A1**
(43) Date of publication of application: **22.10.2025**
(21) Application number: 24741300.8
(22) Date of filing: 10.01.2024
(51) Int. Cl.: B60W 30/18

(54) **VEHICLE U-TURN CONTROL METHOD AND APPARATUS, AND VEHICLE**

(30) Priority: 13.01.2023 CN 202310098436
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: CUI, Xiaofei, Hangzhou, Zhejiang 310051 (CN); HE, Dalong, Hangzhou, Zhejiang 310051 (CN); TANG, Xing, Hangzhou, Zhejiang 310051 (CN); JING, Jiazeng, Hangzhou, Zhejiang 310051 (CN); QIN, Yutai, Hangzhou, Zhejiang 310051 (CN); CAO, Da, Hangzhou, Zhejiang 310051 (CN)
(74) Representative: Studio Torta S.p.A.
(86) International application number: PCT/CN2024/071659
(87) International publication number: WO 2024/149304

(57) **Abstract**

Provided in the present application are a vehicle U-turn control method and apparatus, and a vehicle. The method includes: first, after detecting that a creeping U-turn function is activated, collecting and acquiring, by a vehicle, a steering wheel angle; determining whether the vehicle currently satisfies a preset creeping U-turn condition according to the steering wheel steering angle; when the creeping U-turn condition is satisfied, acquiring, by the vehicle, transmission gear position information and transfer case gear position information, and acquiring a target vehicle speed of the vehicle during a creeping U-turn process according to the information; then calculating and acquiring a braking pressure force of an inner front wheel and a braking pressure force of an inner rear wheel when the vehicle performs a U-turn according to the steering wheel angle, a wheelbase and a track width of the vehicle; and finally, according to the target vehicle speed, the braking pressure force of the inner front wheel and the braking pressure force of the inner rear wheel, controlling the vehicle to perform a creeping U-turn. By means of the present solution, a vehicle U-turn turning radius can be reduced, and an automatic speed control during a turning process can be realized, thereby improving the smoothness and controllability of a U-turn driving.

## Description

This present application claims the priority of the Chinese Patent Application No. 202310098436.8, filed with the China National Intellectual Property Administration on January 13, 2023, titled "VEHICLE U-TURN CONTROL METHOD AND APPARATUS, AND VEHICLE", which is hereby incorporated by reference in its entirety.

### TECHNICAL FIELD

The present application relates to the field of vehicle control technology, and in particular to a vehicle U-turn method and apparatus, and a vehicle.

### BACKGROUND

As the popularity of automobiles increases, people pay more and more attention to mobility of automobiles. The mobility refers to an ability to overcome complex road conditions and perform returning. Traditional vehicle steering system has a complex structure, and due to structural characteristics of each component, a minimum turning radius of the vehicle is limited, which makes it impossible to realize turning effectively when encountering a narrow turning space.

In the prior art, there are two main solutions to reduce the turning radius so as to improve mobility: one is to reduce a wheelbase and redesign a steering system to increase a deflection angle of two front wheels, which, however, has a limited improvement due to a boundary restriction of a specific vehicle; the other is to brake a rear wheel on a single side to reduce the turning radius, which, however, can only be used in specific scenarios currently, has cumbersome operation steps, and is unable to control a vehicle speed stably during a U-turn process due to a complex road surface condition, thereby resulting in a poor riding experience of users.

Therefore, how to achieve a stable U-turn of the vehicle is a problem to be solved.

### SUMMARY

Embodiments of the present application provide a vehicle U-turn control method and apparatus, and a vehicle, so as to solve the problem for smoothly performing a vehicle U-turn.

In a first aspect, an embodiment of the present application provides a vehicle U-turn control method, applied to a vehicle, including:
collecting and acquiring a steering wheel angle of the vehicle after detecting that a creeping U-turn function is activated;
determining whether the vehicle currently satisfies a preset creeping U-turn condition according to the steering wheel steering angle;
acquiring transmission gear position information and transfer case gear position information when the vehicle satisfies the creeping U-turn condition, and acquiring a target vehicle speed of the vehicle during a creeping U-turn process according to the transmission gear position information and the transfer case gear position information;
calculating and acquiring a braking pressure force of an inner front wheel and a braking pressure force of an inner rear wheel when the vehicle performs a U-turn according to the steering wheel angle, a wheelbase and a track width of the vehicle;
controlling the vehicle to perform a creeping U-turn according to the target vehicle speed, the braking pressure force of the inner front wheel, and the braking pressure force of the inner rear wheel.

In combination with the first aspect, in some embodiments, the acquiring the target vehicle speed of the vehicle during the creeping U-turn process according to the transmission gear position information and the transfer case gear position information includes:
according to the transmission gear position information and the transfer case gear position information, looking up a pre-configured target vehicle speed table to acquire the target vehicle speed of the vehicle during the creeping U-turn process; where, the target vehicle speed table includes an experimentally determined corresponding relationship between a transmission gear position, a transfer case gear position, and a vehicle speed.

In combination with the first aspect, in some embodiments, the controlling the vehicle to perform the creeping U-turn according to the target vehicle speed, the braking pressure force of the inner front wheel, and the braking pressure force of the inner rear wheel includes:
applying a pressure to the inner front wheel according to the braking pressure force of the inner front wheel, and applying a pressure to the inner rear wheel according to the braking pressure force of the inner rear wheel;
controlling the vehicle along the steering wheel steering angle, and controlling a vehicle speed to be maintained within a preset range of the target vehicle to perform a creeping U-turn.

In combination with the first aspect, in some embodiments, the controlling the vehicle speed to be maintained within the preset range of the target vehicle to perform the creeping U-turn includes:
when a current vehicle speed of the vehicle is less than the target vehicle speed, increasing a vehicle torque to increase the vehicle speed, each increment of the vehicle torque decreasing in a parabolic manner;
when the current vehicle speed of the vehicle is greater than the target vehicle speed, controlling a vehicle wheel of the vehicle to brake and decelerate.

In combination with the first aspect, in some embodiments, the creeping U-turn condition includes that the steering wheel angle is greater than or equal to 80% of a unidirectional limit angle;
accordingly, the determining whether the vehicle currently satisfies the preset creeping U-turn condition according to the steering wheel angle includes:
determining whether the steering wheel angle is greater than or equal to 80% of the unidirectional limit angle of a steering wheel of the vehicle;
when the steering wheel angle is greater than or equal to 80% of the unidirectional limit angle of the steering wheel of the vehicle, determining that the vehicle currently satisfies the creeping U-turn condition;
otherwise, determining that the vehicle currently does not satisfy the creeping U-turn condition.

In combination with the first aspect, in some embodiments, the creeping U-turn condition includes that the vehicle is in a parking state and the steering wheel angle is greater than or equal to 80% of a unidirectional limit angle;
accordingly, the determining whether the vehicle currently satisfies the preset creeping U-turn condition according to the steering wheel angle includes:
determining whether a current state of the vehicle is the parking state;
when the current state of the vehicle is the parking state, determining whether the steering wheel angle is greater than or equal to 80% of the unidirectional limit angle of the steering wheel of the vehicle;
when the steering wheel angle is greater than or equal to 80% of the unidirectional limit angle of the steering wheel of the vehicle, determining that the vehicle currently satisfies the creeping U-turn condition;
when the current state of the vehicle is not the parking state, or the steering wheel angle is less than 80% of the unidirectional limit angle of the steering wheel of the vehicle, determining that the vehicle currently does not satisfy the creeping U-turn condition.

In a second aspect, an embodiment of the present application further provides a vehicle U-turn control apparatus, including:
a detection module, configured to collect and acquire a steering wheel angle of a vehicle after detecting that a creeping U-turn function is activated;
a determination module, configured to determine whether the vehicle currently satisfies a preset creeping U-turn condition according to the steering wheel steering angle;
a vehicle speed determination module, configured to acquire transmission gear position information and transfer case gear position information when the vehicle satisfies the creeping U-turn condition, and acquire a target vehicle speed of the vehicle during a creeping U-turn process according to the transmission gear position information and the transfer case gear position information;
a calculation module, configured to calculate and acquire a braking pressure force of an front wheel and a braking pressure force of an inner rear wheel when the vehicle performs a U-turn according to the steering wheel angle, a wheelbase and a track width of the vehicle;
a control module, configured to control the vehicle to perform a creeping U-turn according to the target vehicle speed, the braking pressure force of the inner front wheel, and the braking pressure force of the inner rear wheel.

In combination with the second aspect, in some embodiments, the vehicle speed determination module is specifically configured to:
according to the transmission gear position information and the transfer case gear position information, look up a pre-configured target vehicle speed table to acquire the target vehicle speed of the vehicle during the creeping U-turn process; where, the target vehicle speed table includes an experimentally determined corresponding relationship between a transmission gear position, a transfer case gear position, and a vehicle speed.

In combination with the second aspect, in some embodiments, the control module is specifically configured to:
apply a pressure to the inner front wheel according to the braking pressure force of the inner front wheel, and apply a pressure to the inner rear wheel according to the braking pressure force of the inner rear wheel;
control the vehicle along the steering wheel steering angle, and control a vehicle speed to be maintained within a preset range of a target vehicle to perform the creeping U-turn.

In combination with the second aspect, in some embodiments, the control module is further configured to:
when a current vehicle speed of the vehicle is less than the target vehicle speed, increase a vehicle torque to increase the vehicle speed, each increment of the vehicle torque decreasing in a parabolic manner;
when the current vehicle speed of the vehicle is greater than the target vehicle speed, control a vehicle wheel of the vehicle to brake and decelerate.

In combination with the second aspect, in some embodiments, the creeping U-turn condition includes that the steering wheel angle is greater than or equal to 80% of a unidirectional limit angle;
accordingly, the determination module is specifically configured to:
determine whether the steering wheel angle is greater than or equal to 80% of the unidirectional limit angle of a steering wheel of the vehicle;
when the steering wheel angle is greater than or equal to 80% of the unidirectional limit angle of the steering wheel of the vehicle, determine that the vehicle currently satisfies the creeping U-turn condition;
otherwise, determine that the vehicle currently does not satisfy the creeping U-turn condition.

In combination with the second aspect, in some embodiments, the creeping U-turn condition includes that the vehicle is in a parking state and the steering wheel angle is greater than or equal to 80% of a unidirectional limit angle;
accordingly, the determination module is specifically configured to:
determine whether a current state of the vehicle is a parking state;
when the current state of the vehicle is the parking state, determine whether the steering wheel angle is greater than or equal to 80% of the unidirectional limit angle of the steering wheel of the vehicle;
when the steering wheel angle is greater than or equal to 80% of the unidirectional limit angle of the steering wheel of the vehicle, determine that the vehicle currently satisfies the creeping U-turn condition;
when the current state of the vehicle is not the parking state, or the steering wheel deflection angle is less than 80% of the unidirectional limit angle of the steering wheel of the vehicle, determine that the vehicle currently does not satisfy the creeping U-turn condition.

In a third aspect, the embodiment of the present application may also provide a vehicle, including:
a vehicle body, an Electronic Stability Control, ESC system, a processor, a memory communicatively connected to the processor, and a communication interface for interacting with other devices;
the memory stores computer-executable instructions;
the processor executes the computer-executable instructions stored in the memory to implement any one of the vehicle U-turn control methods as described in the first aspect.

In a fourth aspect, an embodiment of the present application further provides a computer-readable storage medium, where computer-executable instructions are stored in the computer-readable storage medium, and the computer-executable instructions, when executed by a processor, are configured to implement any one of the vehicle U-turn control methods as described in the first aspect.

In a fifth aspect, an embodiment of the present application provides a chip, including a memory and a processor, where the memory stores codes and data, the memory is coupled to the processor, and the processor runs a program in the memory so as to enable the chip to execute any one of the vehicle U-turn control methods described in the first aspect.

In a sixth aspect, an embodiment of the present application provides a program product, including a computer program, and when the program product is run on a computer, the computer is enabled to execute any one of the vehicle U-turn control method described in the first aspect above.

In a seventh aspect, an embodiment of the present application provides a computer program, which, when executed by a processor, is configured to execute any one of the vehicle U-turn control methods described in the first aspect above.

In the vehicle U-turn control method and apparatus, and the vehicle provided in the present application, after detecting that the creeping U-turn function is activated, by collecting and acquiring a steering wheel angle of a vehicle, it is determined whether the vehicle currently satisfies a preset creeping U-turn condition according to the steering wheel steering angle; when the creeping U-turn condition is satisfied, the vehicle acquires transmission gear position information and transfer case gear position information, and acquires a target vehicle speed of the vehicle during a creeping U-turn process according to the transmission gear position information and the transfer case gear position information; the vehicle calculates and acquires a braking pressure force of an inner front wheel and a braking pressure force of an inner rear wheel when performing a U-turn according to the steering wheel angle, a wheelbase and a track width of the vehicle; and controls the vehicle to perform a creeping U-turn according to the target vehicle speed, the braking pressure force of the inner front wheel, and the braking pressure force of the inner rear wheel. Through this solution, the U-turn radius of the vehicle can be reduced, and the speed is automatically controlled during a turning process without the need for accelerator control, thereby improving the smoothness and controllability of the vehicle's U-turn.

### BRIEF DESCRIPTION OF DRAWINGS

The accompanying drawings herein, which are incorporated in and constitute a part of this specification, illustrate embodiments consistent with the present application and, together with the description, serve to explain the principles of the present application.
FIG. 1 is a schematic diagram showing that a vehicle is performing a U-turn on a road provided by an embodiment of the present application.
FIG. 2 is a flow chart of a first embodiment of a vehicle U-turn control method provided by an embodiment of the present application.
FIG. 3 is a schematic diagram of a vehicle U-turn provided by an embodiment of the present application.
FIG. 4 is a flow chart of a second embodiment of a vehicle U-turn control method provided by an embodiment of the present application.
FIG. 5 is a flow chart of a third embodiment of a vehicle U-turn control method provided by an embodiment of the present application.
FIG. 6 is a schematic diagram of increasing a vehicle torque provided by an embodiment of the present application.
FIG. 7 is a flow chart of a fourth embodiment of a vehicle U-turn control method provided by an embodiment of the present application.
FIG. 8 is a flow chart of a fifth embodiment of a vehicle U-turn control method provided by an embodiment of the present application.
FIG. 9 is a schematic structural diagram of a first embodiment of a vehicle U-turn control apparatus provided by an embodiment of the present application.
FIG. 10 is a schematic structural diagram of a vehicle provided in the present application.

The above drawings have illustrated embodiments of the present application clearly, which will be described in more detail hereinafter. These drawings and written descriptions are not intended to limit the scope of the present application in any way, but to illustrate the concept of the present application to those skilled in the art by referring to specific embodiments.

### DESCRIPTION OF EMBODIMENTS

Exemplary embodiments will be described in detail herein, examples of which are shown in the accompanying drawings. When the following description refers to the drawings, unless otherwise indicated, the same numerals in different drawings represent the same or similar elements. The implementations described in the following exemplary embodiments do not represent all implementations consistent with the present application. Instead, they are merely examples of apparatuses and methods consistent with some aspects of the present application as detailed in the appended claims.

First, the terms involved in the present application are explained as follows.

Creeping refers to a low-speed cruise driving assistance system of a vehicle, which can automatically control an engine to output a torque, transmission system, and brake, allowing the vehicle to pass through harsh road surfaces at a very slow speed. With the creeping function, a driver does not need to operate an accelerator and a brake, the vehicle can control itself automatically, and a torque can be released based on feedback from road conditions. By electronically distributing the braking force to four wheels, the wheels are ultimately prevented from slipping or sinking.

Electronic Stability Control (Electronic Stability Control, ESC for short) system is an active safety technology that assists a driver in controlling a vehicle, which, at the same time, further extends the functions of an anti-lock braking system and a traction control system in a vehicle. ESC mainly controls the longitudinal and lateral stability of a vehicle to ensure its stable driving. The braking of the vehicle is mainly achieved via a hydraulic pressure provided by the ESC or a motor-assisted caliper clamping provided by an Electronic Park Brake (EPB) system.

Tank U-turn refers to a function of a vehicle that reduces a turning radius and allows the vehicle to make a U-turn in a near in-place steering manner to ensure direction reversal a very narrow road. In this solution, the tank U-turn and creeping U-turn refer to the same operation.

Traditional vehicle steering system has a complex structure, and due to structural characteristics of each component, a minimum turning radius of the vehicle is limited, which makes it impossible to realize turning effectively when encountering a narrow turning space. In the prior art, there are two main solutions to reduce the turning radius so as to improve mobility: one is to reduce a wheelbase and redesign a steering system to increase a deflection angle of two front wheels; the other solution is to brake a rear wheel on a single side to reduce the turning radius. The solution to brake the rear wheel on the single side is realized by a hydraulic pressure provided by the ESC system or a motor-assisted caliper clamping provided by EPB, however, the ESC system has many functions and a complex internal logic, realizing a single-side rear wheel braking needs to be restricted by other functions, which has a certain impact on the durability and life of the ESC system itself.

The existing technology still has the defects as follow.
1. The usage scenario is single and can only be used in the vehicle's off-road mode (off road).
2. There are many steps for a tank U-turn operation: taking an operation of the Great Wall Tank 300 as an example, which generally engages 4L first, then engages off-road cruise, and finally enters the tank U-turn.
3. When executing the tank U-turn, the vehicle is unstable, the anti-lock brake system (ABS) generates significant impact during phased pressure buildup, resulting in obvious noise.
4. The vehicle speed cannot be controlled smoothly, which first slows down and then speeds up.

That is to say, only a few vehicles currently have a U-turn function, which can reduce a turning radius of a vehicle. Besides, when the vehicle performs U-turn, the execution steps are cumbersome, the speed changes greatly, and the vehicle body is unstable.

In order to solve the problems existing in the prior art, the inventor discovered, during the research on the technical field, that a vehicle can apply different braking forces thereto through an ESC function, so as to control a vehicle speed. On the basis of this, by applying different hydraulic braking forces on the inner front and rear wheels of the vehicle during a turning process, a turning and U-turn radius of the vehicle can be reduced and the vehicle can be controlled to travel automatically and smoothly at a stable speed. Therefore, the present application provides a vehicle U-turn control method and apparatus, and a vehicle.

In the technical solution of the present application, a vehicle can perform a U-turn in a creeping mode.

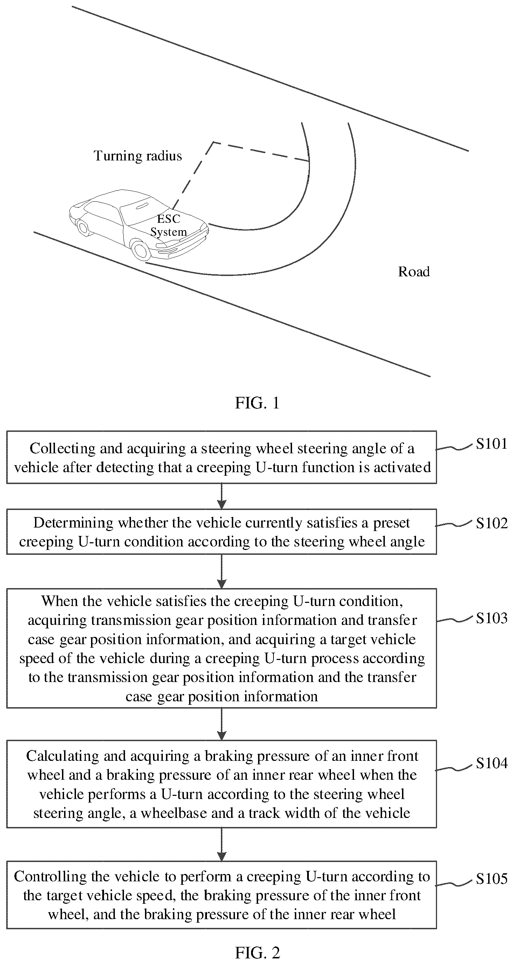

FIG. 1 is a schematic diagram showing that a vehicle is performing a U-turn on a road provided by an embodiment of the present application. As shown in FIG. 1, when a vehicle performs a U-turn on a road, a certain turning radius is required. In order to achieve a creeping U-turn, each wheel of the vehicle needs to be controlled. Therefore, the present solution can be applied to a distributed-drive vehicle. For a non-distributed drive vehicle, an ESC system can be configured in a vehicle architecture thereof, so as to realize braking and creeping through the ESC system, thereby achieving a vehicle U-turn. In summary, the vehicle U-turn control method provided by the present application can be applied to a variety of vehicles, and the vehicle type is not specifically therein.

The vehicle U-turn control method provided by the present application is described in detail below through several specific embodiments.

It should be noted that the following specific embodiments may be combined with each other, and the same or similar concepts or processes may not be described in detail in some embodiments.

FIG. 2 is a flow chart of a first embodiment of a vehicle U-turn control method provided by an embodiment of the present application. As shown in FIG. 2, the method for controlling a vehicle U-turn includes the following steps:
S101, collecting and acquiring a steering wheel angle of a vehicle after detecting that a creeping U-turn function is activated.

In this step, when a vehicle driver is in a narrow road condition or cannot complete a vehicle U-turn under a normal driving, the vehicle driver turns on a creeping U-turn switch. When a creeping U-turn condition is satisfied, the driver does not need to operate an accelerator and a brake, the vehicle can control itself to drive at a slow speed, and the driver can still control the vehicle through the brake to ensure safety. The creeping auxiliary switch can be set on a display screen of the vehicle, or, it can be a physical switch on the vehicle, which is not limited therein.

When the vehicle detects that a driver has turned on a creeping U-turn switch, it indicates that the driver intends to perform a vehicle U-turn, and an angle required for the vehicle U-turn needs to be further determined. By collecting a steering angle of the vehicle through a steering angle sensor connected to a steering wheel in real time, the turning angle required by the driver for turning is determined. In this solution, the steering wheel and the directional wheel refer to the same vehicle structure.

In a specific implementation, after the vehicle collects the steering angle of the steering wheel through the steering angle sensor, a tire deflection angle is collected through the ESC system, and the tire deflection angle is converted into a steering wheel deflection angle through a conversion relationship, so that the steering angle can be determined more accurately by the combination of the two angles. It can be understandable that the steering angle of the steering wheel and the tire deflection angle are in direct proportion.

S102, determining whether the vehicle currently satisfies a preset creeping U-turn condition according to the steering wheel steering angle.

In this solution, during an actual driving, when the driver turns on a creeping U-turn switch, a creeping U-turn mode enters a ready state, the steering wheel angle collected by the vehicle may be 0°, 10°, 20°, etc., and at this time, the driver has not adjusted a vehicle U-turn posture in position. Therefore, it is necessary to determine whether the creeping U-turn condition is satisfied, and a steering angle value needs to be set in advance during a design process. When the steering wheel steering angle is greater than the steering angle value, the creeping U-turn is triggered, and when the steering wheel steering angle is less than the steering angle value, the creeping U-turn is not triggered.

In a specific implementation, the preset steering angle value is 80% of a maximum unidirectional steering angle of the vehicle, either to the left or to the right. When a steering angle is less than this value, a subsequent operation of the creeping U-turn will not be triggered; when a steering angle is greater than this value, it indicates that the driver needs to perform the creeping U-turn.

Optionally, when the vehicle detects that the creeping U-turn switch is turned on, the creeping U-turn mode enters the ready state, and a creeping U-turn prompt message, which is used to instruct the driver to operate the vehicle to satisfy the creeping U-turn condition, is sent to the driver.

S103, when the vehicle satisfies the creeping U-turn condition, acquiring transmission gear position information and transfer case gear position information, and acquiring a target vehicle speed of the vehicle during a creeping U-turn process according to the transmission gear position information and the transfer case gear position information.

In this step, after the vehicle creeping U-turn condition is satisfied, a vehicle speed during the vehicle U-turn driving needs to be determined. In general, during the vehicle U-turn process, a driving speed is determined by driver's accelerator. In this solution, in order to facilitate the driver's operation, an auxiliary driving is performed at a set speed during the creeping U-turn process. The set speed is not fixed, and the set target vehicle speed is determined by the transmission gear position information and the transfer case gear position information of the vehicle operated by the driver. The driver can switch the target vehicle speed set by shifting the gears.

In a specific implementation, the vehicle determines a driving speed for U-turn driving by looking up a target vehicle speed table based on the current transmission gear position information and transfer case gear position information, where the target vehicle speed table includes an experimentally determined corresponding relationship between a transmission gear position, a transfer case gear position and a vehicle speed.

Specifically, the vehicle acquires the current transmission gear position information, an engine control module (Engine Control Module, ECM for short) collects four-wheel drive mode signal (two-wheel drive 2H, high-speed four-wheel drive 4H, low-speed four-wheel drive 4L, automatic four-wheel drive 4A) of the transfer case gear position information, and according to the transmission gear position information and the transfer case gear position information, a current target vehicle speed is determined by looking up the target vehicle speed table (Table 1).

**Table 1. Target vehicle speed table**

| Target vehicle speed lookup table | Transfer case | 2H | 4H | 4A | 4L |
|---|---|---|---|---|---|
| Transmission | R1 | 3 kph | 2 kph | 3 kph | 2 kph |
| | D1 | 4 kph | 3 kph | 3 kph | 2 kph |

S104, calculating and acquiring a braking pressure force of an inner front wheel and a braking pressure force of an inner rear wheel when the vehicle performs a U-turn according to the steering wheel angle, a wheelbase and a track width of the vehicle.

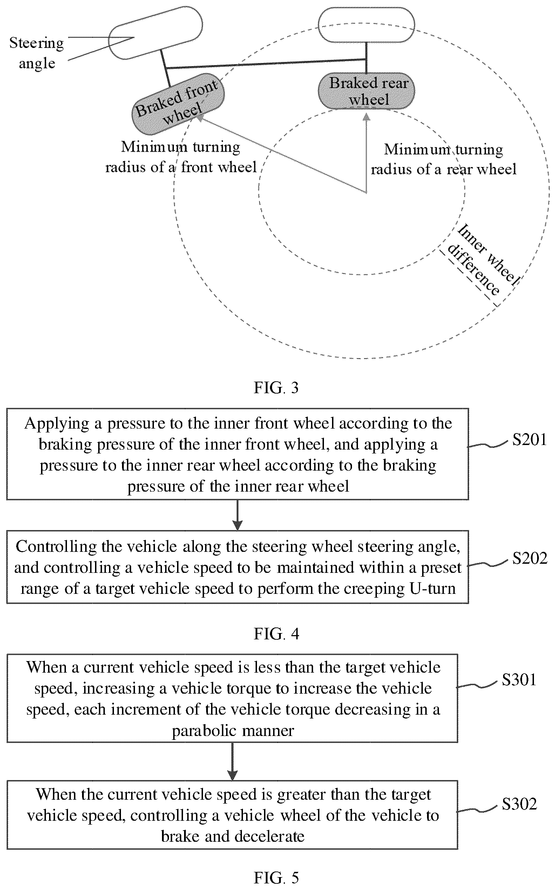

In this step, braking forces are applied to the inner front wheel and the inner rear wheel of the vehicle during a turning to reduce a turning radius of the vehicle during the U-turn process. FIG. 3 is a schematic diagram of a vehicle U-turn provided by an embodiment of the present application. As shown in FIG. 3, during an actual U-turn process, paths passed by the braked inner front wheel and the braked inner rear wheel of the vehicle are different, so the turning radiuses thereof are different and the braking forces required to be applied thereto are also different. It can be understood that when a steering wheel steering angle of the vehicle is the largest, the turning radius is the smallest, and the braking force required for turning is the largest. The turning radius of the vehicle is determined by multiple factors such as the steering angle, vehicle speed, and wheel braking force.

In a certain vehicle model, when a steering wheel angle is maximum, a turning radius is the smallest. A minimum turning radius of a front wheel and a minimum turning radius of a rear wheel at different speeds obtained by the experiment are prerecorded in advance in the vehicle. Therefore, the vehicle can calculate an estimated turning radiuses of the front and rear wheels at a target vehicle speed based on a proportion of an actually collected steering wheel steering angle to a maximum steering angle. The steering wheel angle and the turning radius are inversely proportional. The larger the steering wheel angle, the smaller the turning radius. After calculating the estimated turning radius, the vehicle calculates the braking pressure force required for U-turn based on wheelbase and track width information of the vehicle.

S105, controlling the vehicle to perform a creeping U-turn according to the target vehicle speed, the braking pressure force of the inner front wheel, and the braking pressure force of the inner rear wheel.

In this step, the vehicle controls itself to maintain the target vehicle speed to perform the creeping U-turn according to the calculated braking pressure force. If a current vehicle speed is within a preset deviation range of the target vehicle speed, no adjustment is required, and a current torque and braking pressure force are maintained to continue creeping. If a vehicle speed is less than the preset deviation range of the target vehicle speed, a vehicle torque is increased to increase the vehicle speed. If a vehicle speed is greater than the target vehicle speed, four-wheel braking is performed to limit the speed.

Specifically, in the vehicle's ESC system, the steering wheel steering angle, target vehicle speed, and the vehicle's inherent wheelbase and track width information are input, then the ESC system algorithm will automatically predict the vehicle's driving trajectory and calculate the required rotation speeds for four wheels. When the speed exceeds the target vehicle speed, a pressure is applied to the four wheels individually to maintain the required speeds of the four wheels; when the speed is lower than the target vehicle speed, a vehicle torque is increased.

During a creeping U-turn driving, the vehicle detects the transmission gear position information in real time. If the transmission is detected to be engaged in parking P gear, the creeping U-turn mode is exited. During the creeping U-turn driving, if the vehicle detects a brake application via a braking pedal, the creeping U-turn mode is adjusted to a standby mode. In the standby mode, the vehicle stops the creeping U-turn. When the braking pedal is released, the vehicle re-detects whether a creeping U-turn condition is satisfied, if the creeping U-turn condition is satisfied, the creeping U-turn continues; if the creeping U-turn condition is not satisfied, the creeping U-turn mode is exited.

The present embodiment provides a vehicle U-turn control method. After a vehicle detects that a creeping U-turn function is activated, the vehicle acquires a steering wheel angle of the vehicle, and determines whether the vehicle currently satisfies a preset creeping U-turn condition based on the steering wheel steering angle. When the vehicle satisfies the creeping U-turn condition, transmission gear position information and transfer case gear position information are acquired, and a target vehicle speed during the creeping U-turn is acquired based on the transmission gear position information and the transfer case gear position information; a braking pressure force of an inner front wheel and a braking pressure force of an inner rear wheel when the vehicle performs a U-turn are calculated and acquired based on the steering wheel angle, a wheelbase and a track width of the vehicle; the vehicle is controlled to perform the creeping U-turn based on the target vehicle speed, the braking pressure force of the inner front wheel and the braking pressure force of the inner rear wheel. Though the method, the vehicle can automatically control its speed to perform a creeping driving during a vehicle U-turn process, and the driver does not need to step on the accelerator, thereby improving driving smoothness and controllability.

FIG. 4 is a flow chart of a second embodiment of a vehicle U-turn control method provided by an embodiment of the present application. As shown in FIG. 4, based on the first embodiment, step S105, i.e., the controlling the vehicle to perform a creeping U-turn according to the target vehicle speed, the braking pressure force of the inner front wheel, and the braking pressure force of the inner rear wheel specifically includes the following steps:
S201, applying a pressure to the inner front wheel according to the braking pressure force of the inner front wheel, and applying a pressure to the inner rear wheel according to the braking pressure force of the inner rear wheel.

In this step, different hydraulic braking forces are applied to the inner rear wheel and the inner front wheel during the U-turn process, which can reduce the turning radius. During the turning process, the vehicle calculates the braking pressure force of the inner front wheel and the braking pressure force of the inner rear wheel, and applies the calculated braking forces to the inner front wheel and rear wheel respectively through the ESC system.

S202, controlling the vehicle along the steering wheel steering angle, and controlling a vehicle speed to be maintained within a preset range of a target vehicle to perform the creeping U-turn.

In this step, in order to facilitate the driver's driving safety, the ESC system assists the vehicle to automatically perform creeping, and the driver right foot remains on the braking pedal, so as to concentrate on observing the surrounding environment. The vehicle creeps around a turn along the steering wheel steering angle, and the ESC automatically keeps the vehicle speed within a preset deviation of the target vehicle speed. When the speed exceeds the preset range, braking is applied, and when the vehicle speed is lower than the preset range, acceleration is performed. A preset deviation can be set as 3%, 5%, or 8% deviated from the target vehicle speed. The specific deviation range is not limited in this solution.

The present embodiment provides a vehicle U-turn control method, where the vehicle applies braking pressure forces to the inner front wheel and the inner rear wheel, and controls the vehicle speed to maintain within a preset range to perform a creeping U-turn. This solution can reduce the turning radius and increase safety and convenience during driving.

FIG. 5 is a flow chart of a third embodiment of a vehicle U-turn control method provided by an embodiment of the present application. As shown in FIG. 5, based on the above-mentioned second embodiment, step S202, i.e., the controlling the vehicle speed to be maintained within the preset range of the target vehicle to perform the creeping U-turn includes the following steps:
S301, when a current vehicle speed of the vehicle is less than the target vehicle speed, increasing a vehicle torque to increase the vehicle speed, each increment of the vehicle torque decreasing in a parabolic manner.

In this step, when the vehicle speed is lower than the target vehicle speed due to vehicle starting or uneven road condition, the vehicle speed is automatically increased when it is detected that the driver does not step on the brake, and the increase in vehicle speed is achieved by increasing the vehicle torque.

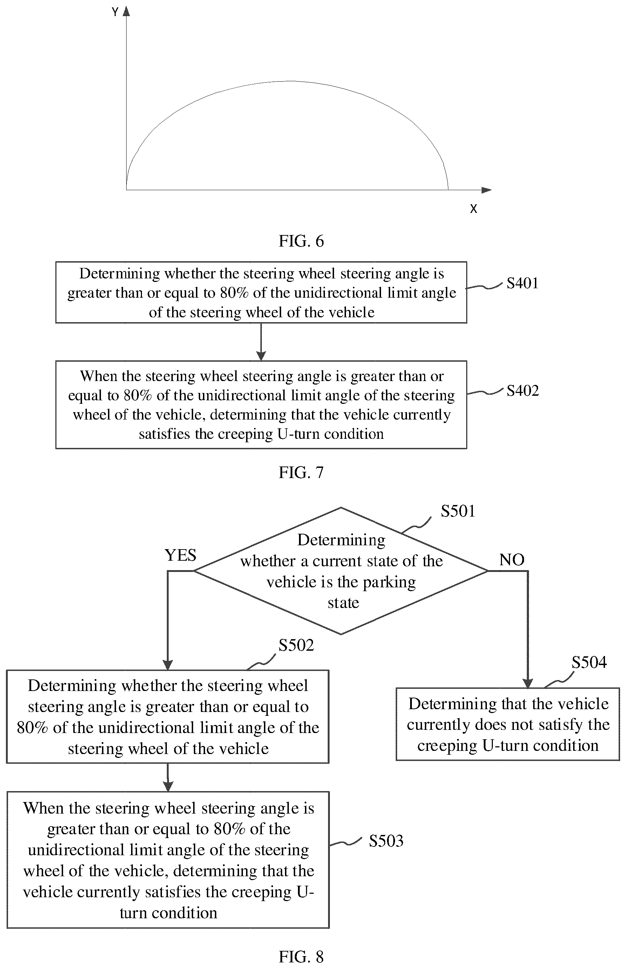

FIG. 6 is a schematic diagram of increasing a vehicle torque provided by the embodiment of the present application. In FIG. 6, the X-axis represents time, the Y-axis represents torque value, and an increment of the vehicle torque decreases in a parabolic manner, that is, the amount of the torque increased each time decreases gradually, enabling the vehicle to start and drive more stably. Specifically, a torque change rate is calibrated with reference to a time increment. For example, if the target vehicle speed is 3kph, and the vehicle is hindered by uneven road surfaces or obstacles during driving, which results in a vehicle speed of 0kph, then an output torque will increase accordingly. As the time changes in a 100ms unit, the torque will increase by 5 calibrated amount·Newton·meter (XNm) in the first 100ms, the torque will increase by 4XNm in the second 100ms, the torque will increase by 3XNm in the third 100ms, and a torque increment decreases progressively in this analogous manner until the speed reaches the target vehicle speed range of 2.8kph-3.2kph and slowly creeps with a speed detection accuracy up to 0.1kph.

Optionally, the torque increases in accordance to a parabolic formula of a curve X² = -2Py.

S302, when the current vehicle speed of the vehicle is greater than the target vehicle speed, controlling a vehicle wheel of the vehicle to brake and decelerate.

In this step, when the vehicle speed exceeds the preset range of the target vehicle speed, the vehicle needs to be controlled to slow down. In the vehicle's ESC system, the vehicle's driving trajectory can be predicted based on the steering wheel steering angle, the target vehicle speed, and the vehicle's inherent wheelbase and track width information, and the required rotation speeds for four wheels can be calculated. When the target vehicle speed is exceeded, a respective pressure is applied to the four wheels to maintain required speeds of the four wheels.

The present embodiment provides a vehicle U-turn control method, which performs a creeping U-turn by automatically controlling a vehicle speed to be maintained within a preset range of a target vehicle, increasing a torque for speed acceleration when the vehicle speed is less than the range of the target vehicle speed, and braking four vehicle wheels when the vehicle speed is greater than the range of the target vehicle speed. Through this solution, a stable speed is maintained during a U-turn creeping process, which increases driving smoothness and improves the driver's experience.

FIG. 7 is a flow chart of a fourth embodiment of a vehicle U-turn control method provided by an embodiment of the present application. As shown in FIG. 7, based on the first embodiment, in the step S102, i.e., in the determining whether the vehicle currently satisfies a preset creeping U-turn condition, the creeping condition includes that the steering wheel angle is greater than or equal to 80% of an unidirectional limit angle, so the step S102 includes the following steps:
S401, determining whether the steering wheel angle is greater than or equal to 80% of the unidirectional limit angle of the steering wheel of the vehicle.

In this step, after the driver turns on the creeping U-turn switch, in order to prevent the driver from driving automatically without adjusting the vehicle's turning posture, it is necessary to judge whether the vehicle satisfies the creeping U-turn condition. Whether the creeping U-turn condition is satisfied is judged by the steering angle of the driver's steering wheel. The steering angle of the driver's steering wheel must be 80% or more of the unidirectional steering angle limit, indicating that the vehicle's creeping U-turn posture is ready.

S402, when the steering wheel angle is greater than or equal to 80% of the unidirectional limit angle of the steering wheel of the vehicle, determining that the vehicle currently satisfies the creeping U-turn condition;
otherwise, determining that the vehicle currently does not satisfy the creeping U-turn condition.

In this step, when the steering angle is less than 80%, the creeping U-turn condition is not satisfied, an automatic speed control is not performed and the vehicle is driven according to an actual operation of the driver.

The present embodiment provides a vehicle U-turn control method, which determines whether a creeping U-turn condition is satisfied by determining whether the steering wheel angle is greater than or equal to 80% of the unidirectional limit angle of the steering wheel of the vehicle. This solution can prevent the vehicle from automatically driving when the driver has not adjusted the vehicle's turning posture, thereby increasing driving safety.

FIG. 8 is a flow chart of a fifth embodiment of a vehicle U-turn control method provided by an embodiment of the present application. As shown in FIG. 8, based on the first embodiment, in step S102, i.e., in the determining whether the vehicle currently satisfies a preset creeping U-turn condition, the creeping U-turn condition is that the vehicle is in a parking state and the steering wheel angle is greater than or equal to 80% of a unidirectional limit angle, the step S102 includes the following steps:
S501, determining whether a current state of the vehicle is the parking state.

In this step, in order to prevent safety accidents caused by the vehicle performing a creeping U-turn during driving due to an accidental touching of the creeping U-turn switch, it is necessary to first determine a current parking state after turning on the creeping U-turn switch. The vehicle collects a current vehicle speed through a speed sensor or a speed dashboard, and determines whether the vehicle speed is 0. If the vehicle speed is 0, a parking state is determined, and step S502 is executed.

If the vehicle speed is not 0, it indicates that the vehicle is not the parking state, and a message will be given to the driver on a vehicle display screen to inform the driver that the vehicle is not in the parking state and a creeping U-turn cannot be performed.

S502, when the current state of the vehicle is the parking state, determining whether the steering wheel angle is greater than or equal to 80% of the unidirectional limit angle of the steering wheel of the vehicle.

S503, when the steering wheel angle is greater than or equal to 80% of the unidirectional limit angle of the steering wheel of the vehicle, determining that the vehicle currently satisfies the creeping U-turn condition.

In this step, if the vehicle is in the parking state, S502 and S503 are executed. Steps S502 and S503 are similar to S401 and S402, which will not be repeated herein.

S504, when the current state of the vehicle is not the parking state, or the steering wheel angle is less than 80% of the unidirectional limit angle of the steering wheel of the vehicle, determining that the vehicle currently does not satisfy the creeping U-turn condition.

In this step, when the vehicle is not in the parking state or the steering wheel angle is less than 80% of the unidirectional limit angle of the steering wheel of the vehicle, the creeping U-turn condition is not satisfied and the vehicle is driven according to the actual operation of the driver.

The present embodiment provides a vehicle U-turn control method, which determines whether a creeping U-turn condition is satisfied by determining the parking state and whether the steering wheel angle is greater than or equal to 80% of the unidirectional limit angle of the steering wheel of the vehicle. This solution can prevent the danger caused by accidentally touching the creeping U-turn switch during driving, thereby increasing driving safety.

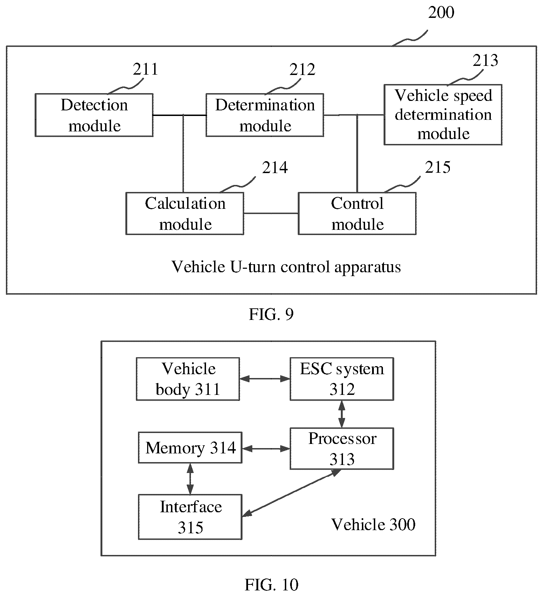

FIG. 9 is a schematic structural diagram of a first embodiment of a vehicle U-turn control apparatus provided by an embodiment of the present application. As shown in FIG. 9, the vehicle U-turn control apparatus 200 includes:
a detection module 211, configured to collect and acquire a steering wheel angle of a vehicle after detecting that a creeping U-turn function is activated;
a determination module 212, configured to determine whether the vehicle currently satisfies a preset creeping U-turn condition according to the steering wheel steering angle;
a vehicle speed determination module 213, configured to acquire transmission gear position information and transfer case gear position information when the vehicle satisfies the creeping U-turn condition, and acquire a target vehicle speed of the vehicle during a creeping U-turn process according to the transmission gear position information and the transfer case gear position information;
a calculation module 214, configured to calculate and acquire a braking pressure force of an inner front wheel and a braking pressure force of an inner rear wheel when the vehicle performs a U-turn according to the steering wheel angle, a wheelbase and a track width of the vehicle;
a control module 215, configured to control the vehicle to perform a creeping U-turn according to the target vehicle speed, the braking pressure force of the inner front wheel, and the braking pressure force of the inner rear wheel.

Optionally, the vehicle speed determination module 213 is specifically configured to:
according to the transmission gear position information and the transfer case gear position information, look up a pre-configured target vehicle speed table to acquire the target vehicle speed of the vehicle during the creeping U-turn process; where, the target vehicle speed table includes an experimentally determined corresponding relationship between a transmission gear position, a transfer case gear position, and a vehicle speed.

Optionally, the control module 215 is specifically configured to:
apply a pressure to the inner front wheel according to the braking pressure force of the inner front wheel, and apply a pressure to the inner rear wheel according to the braking pressure force of the inner rear wheel;
control the vehicle along the steering wheel steering angle, and control a vehicle speed to be maintained within a preset range of a target vehicle to perform the creeping U-turn.

Optionally, the control module 215 is further configured to:
when a current vehicle speed of the vehicle is less than the target vehicle speed, increase a vehicle torque to increase the vehicle speed, each increment of the vehicle torque decreasing in a parabolic manner;
when the current vehicle speed of the vehicle is greater than the target vehicle speed, control a vehicle wheel of the vehicle to brake and decelerate.

The vehicle U-turn control apparatus provided by the present embodiment is configured to execute the vehicle U-turn control method in any of the aforementioned method embodiments, and its implementation principle and technical effect are similar, which will not be described in detail here.

On the basis of the above first apparatus embodiment, in a specific implementation of the vehicle U-turn control apparatus 200, the creeping U-turn condition includes that the steering wheel angle is greater than or equal to 80% of a unidirectional limit angle;
accordingly, the determination module 212 is specifically configured to:
determine whether the steering wheel angle is greater than or equal to 80% of the unidirectional limit angle of the steering wheel of the vehicle;
when the steering wheel angle is greater than or equal to 80% of the unidirectional limit angle of the steering wheel of the vehicle, determine that the vehicle currently satisfies the creeping U-turn condition;
otherwise, determine that the vehicle currently does not satisfy the creeping U-turn condition.

The vehicle U-turn control apparatus provided by the present embodiment is configured to execute the vehicle U-turn control method in any of the aforementioned method embodiments, and its implementation principle and technical effect are similar, which will not be described in detail here.

On the basis of the above first apparatus embodiment, in a specific implementation of the vehicle U-turn control apparatus 200, the creeping U-turn condition includes that the vehicle is in a parking state and the steering wheel angle is greater than or equal to 80% of a unidirectional limit angle; accordingly, the determination module 212 is specifically configured to:
determining whether a current state of the vehicle is the parking state;
when the current state of the vehicle is the parking state, determine whether the steering wheel angle is greater than or equal to 80% of the unidirectional limit angle of the steering wheel of the vehicle;
when the steering wheel angle is greater than or equal to 80% of the unidirectional limit angle of the steering wheel of the vehicle, determine that the vehicle currently satisfies the creeping U-turn condition;
when the current state of the vehicle is not the parking state, or the steering wheel angle is less than 80% of the unidirectional limit angle of the steering wheel of the vehicle, determine that the vehicle currently does not satisfy the creeping U-turn condition.

The vehicle U-turn control apparatus provided by the present embodiment is configured to execute the vehicle U-turn control method in any of the aforementioned method embodiments, and its implementation principle and technical effect are similar, which will not be described in detail here.

FIG. 10 is a schematic structural diagram of a vehicle provided by the present application. As shown in FIG. 10, the vehicle 300 includes:
a vehicle body 311, an Electronic Stability Control, ESC system 312, a processor 313, a memory 314 communicatively connected to the processor, and a communication interface 315 for interacting with other devices;
the memory 314 stores computer-executable instructions;
the processor 313 executes the computer-executable instructions stored in the memory 314 to implement the vehicle U-turn control method as described in any one of the above method embodiments.

Optionally, the above-mentioned components of the vehicle 300 may be connected via a system bus.

The memory 314 may be a separate storage unit or a storage unit integrated in the processor 311. The number of the processor 311 is one or more.

The vehicle provided by the embodiment of the present application is configured to execute the vehicle U-turn control method provided in any of the aforementioned method embodiments, and its implementation principle and technical effects are similar, which will not be repeated here.

It should be understood that the processor 811 can be a central processing unit (CPU), or other general-purpose processors, digital signal processors (DSP), application-specific integrated circuits (ASIC), etc. The general-purpose processor can be a microprocessor or the processor can also be any conventional processor, etc. The steps of the method disclosed in the present application can be directly executed by a hardware processor, or can be executed by a combination of hardware and software modules in the processor.

The system bus may be a peripheral component interconnect (peripheral component interconnect, PCI) bus or an extended industry standard architecture (extended industry standard architecture, EISA) bus. The system bus may be classified into an address bus, a data bus, a control bus, etc. For ease of representation, only one thick line is used in the drawings, but it does not mean that there is only one bus or one type of bus. The memory may include random access memory (random access memory, RAM) and may also include non-volatile memory (non-volatile memory, NVM), such as at least one disk storage.

All or part of the steps of the above-mentioned method embodiments can be completed by hardware related to program instructions. The above-mentioned program can be stored in a readable memory. When the program is executed, the steps of the above-mentioned method embodiments are executed; and the above-mentioned memory (storage medium) includes: read-only memory (Read-Only Memory, ROM), RAM, flash memory, hard disk, solid state drive, magnetic tape (magnetic tape), floppy disk (floppy disk), optical disc (optical disc) and any combination thereof.

The present application also provides a computer-readable storage medium, stored with computer-executable instructions which, when executed by a processor, are configured to implement the vehicle U-turn control method described in any one of the above method embodiments.

An embodiment of the present application provides a chip, which includes a memory and a processor. The memory stores codes and data, and the memory is coupled to the processor. The processor runs a program in the memory so that the chip is enabled to execute the vehicle U-turn control method described in any one of the above method embodiments.

An embodiment of the present application provides a program product, including a computer program, when the program product is run on a computer, the computer is enabled to execute the vehicle U-turn control method described in any one of the above method embodiments.

An embodiment of the present application provides a computer program which, when executed by a processor, is configured to execute the vehicle U-turn control method described in any one of the above method embodiments.

Those skilled in the art will readily appreciate other embodiments of the present application after considering the specification and practicing the invention disclosed herein. The present application is intended to cover any modification, use or adaptation of the present application, and the modification, use or adaptation follows the general principles of the present application and includes common knowledge or customary techniques in the art that are not disclosed in the present application. The specification and embodiments are intended to be exemplary only, and the true scope and spirit of the present application are indicated by the following claims.

It should be understood that the present application is not limited to the precise structures described above and shown in the drawings, and that various modifications and changes may be made without departing from the scope thereof. The scope of the present application is limited only by the appended claims.

## Claims

1. A vehicle U-turn control method, applied to a vehicle, comprising:
collecting and acquiring a steering wheel angle of the vehicle after detecting that a creeping U-turn function is activated;
determining whether the vehicle currently satisfies a preset creeping U-turn condition according to the steering wheel steering angle;
acquiring transmission gear position information and transfer case gear position information when the vehicle satisfies the creeping U-turn condition, and acquiring a target vehicle speed of the vehicle during a creeping U-turn process according to the transmission gear position information and the transfer case gear position information;
calculating and acquiring a braking pressure force of an inner front wheel and a braking pressure force of an inner rear wheel when the vehicle performs a U-turn according to the steering wheel angle, a wheelbase and a track width of the vehicle;
controlling the vehicle to perform a creeping U-turn according to the target vehicle speed, the braking pressure force of the inner front wheel, and the braking pressure force of the inner rear wheel.

2. The method according to claim 1, wherein the acquiring the target vehicle speed of the vehicle during the creeping U-turn process according to the transmission gear position information and the transfer case gear position information comprises:
according to the transmission gear position information and the transfer case gear position information, looking up a pre-configured target vehicle speed table to acquire the target vehicle speed of the vehicle during the creeping U-turn process; wherein the target vehicle speed table comprises an experimentally determined corresponding relationship between a transmission gear position, a transfer case gear position, and a vehicle speed.

3. The method according to claim 1 or 2, wherein the controlling the vehicle to perform the creeping U-turn according to the target vehicle speed, the braking pressure force of the inner front wheel, and the braking pressure force of the inner rear wheel comprises:
applying a pressure to the inner front wheel according to the braking pressure force of the inner front wheel, and applying a pressure to the inner rear wheel according to the braking pressure force of the inner rear wheel;
controlling the vehicle along the steering wheel steering angle, and controlling a vehicle speed to be maintained within a preset range of the target vehicle, so as to perform the creeping U-turn.

4. The method according to claim 3, wherein the controlling the vehicle speed to be maintained within the preset range of the target vehicle to perform the creeping U-turn comprises:
when a current vehicle speed of the vehicle is less than the target vehicle speed, increasing a vehicle torque to increase the vehicle speed, each increment of the vehicle torque decreasing in a parabolic manner;
when the current vehicle speed of the vehicle is greater than the target vehicle speed, controlling a vehicle wheel of the vehicle to brake and decelerate.

5. The method according to any one of claims 1 to 4, wherein the creeping U-turn condition comprises that the steering wheel angle is greater than or equal to 80% of a unidirectional limit angle; and
accordingly, the determining whether the vehicle currently satisfies the preset creeping U-turn condition according to the steering wheel steering angle comprises:
determining whether the steering wheel angle is greater than or equal to 80% of the unidirectional limit angle of a steering wheel of the vehicle;
when the steering wheel angle is greater than or equal to 80% of the unidirectional limit angle of the steering wheel of the vehicle, determining that the vehicle currently satisfies the creeping U-turn condition;
otherwise, determining that the vehicle currently does not satisfy the creeping U-turn condition.

6. The method according to any one of claims 1 to 4, wherein the creeping U-turn condition comprises that the vehicle is in a parking state and the steering wheel angle is greater than or equal to 80% of a unidirectional limit angle;
accordingly, the determining whether the vehicle currently satisfies the preset creeping U-turn condition according to the steering wheel angle comprises:
determining whether a current state of the vehicle is the parking state;
when the current state of the vehicle is the parking state, determining whether the steering wheel angle is greater than or equal to 80% of the unidirectional limit angle of the steering wheel of the vehicle;
when the steering wheel angle is greater than or equal to 80% of the unidirectional limit angle of the steering wheel of the vehicle, determining that the vehicle currently satisfies the creeping U-turn condition;
when the current state of the vehicle is not the parking state, or the steering wheel angle is less than 80% of the unidirectional limit angle of the steering wheel of the vehicle, determining that the vehicle currently does not satisfy the creeping U-turn condition.

7. A vehicle U-turn control apparatus, comprising:
a detection module, configured to collect and acquire a steering wheel angle of a vehicle after detecting that a creeping U-turn function is activated;
a determination module, configured to determine whether the vehicle currently satisfies a preset creeping U-turn condition according to the steering wheel steering angle;
a vehicle speed determination module, configured to acquire transmission gear position information and transfer case gear position information when the vehicle satisfies the creeping U-turn condition, and acquire a target vehicle speed of the vehicle during a creeping U-turn process according to the transmission gear position information and the transfer case gear position information;
a calculation module, configured to calculate and acquire a braking pressure force of an inner front wheel and a braking pressure force of an inner rear wheel when the vehicle performs a U-turn according to the steering wheel angle, a wheelbase and a track width of the vehicle;
a control module, configured to control the vehicle to perform a creeping U-turn according to the target vehicle speed, the braking pressure force of the inner front wheel, and the braking pressure force of the inner rear wheel.

8. The apparatus according to claim 7, wherein the vehicle speed determination module is specifically configured to:
according to the transmission gear position information and the transfer case gear position information, look up a pre-configured target vehicle speed table to acquire the target vehicle speed of the vehicle during the creeping U-turn process; wherein the target vehicle speed table comprises an experimentally determined corresponding relationship between a transmission gear position, a transfer case gear position, and a vehicle speed.

9. The apparatus according to claim 7 or 8, wherein the control module is specifically configured to:
apply a pressure to the inner front wheel according to the braking pressure force of the inner front wheel, and apply a pressure to the inner rear wheel according to the braking pressure force of the inner rear wheel;
control the vehicle along the steering wheel steering angle, and control a vehicle speed to be maintained within a preset range of a target vehicle to perform the creeping U-turn.

10. The apparatus according to claim 9, wherein the control module is further configured to:
when a current vehicle speed of the vehicle is less than the target vehicle speed, increase a vehicle torque to increase the vehicle speed, each increment of the vehicle torque decreasing in a parabolic manner;
when the current vehicle speed of the vehicle is greater than the target vehicle speed, control a vehicle wheel of the vehicle to brake and decelerate.

11. The apparatus according to any one of claims 7 to 10, wherein the creeping U-turn condition comprises that the steering wheel angle is greater than or equal to 80% of a unidirectional limit angle;
accordingly, the determination module is specifically configured to:
determine whether the steering wheel angle is greater than or equal to 80% of the unidirectional limit angle of a steering wheel of the vehicle;
when the steering wheel angle is greater than or equal to 80% of the unidirectional limit angle of the steering wheel of the vehicle, determine that the vehicle currently satisfies the creeping U-turn condition;
otherwise, determine that the vehicle currently does not satisfy the creeping U-turn condition.

12. The apparatus according to any one of claims 7 to 10, wherein the creeping U-turn condition comprises that the vehicle is in a parking state and the steering wheel angle is greater than or equal to 80% of a unidirectional limit angle;
accordingly, the determination module is specifically configured to:
determine whether a current state of the vehicle is the parking state;
when the current state of the vehicle is the parking state, determine whether the steering wheel angle is greater than or equal to 80% of the unidirectional limit angle of the steering wheel of the vehicle;
when the steering wheel angle is greater than or equal to 80% of the unidirectional limit angle of the steering wheel of the vehicle, determine that the vehicle currently satisfies the creeping U-turn condition;
when the current state of the vehicle is not the parking state, or the steering wheel angle is less than 80% of the unidirectional limit angle of the steering wheel of the vehicle, determine that the vehicle currently does not satisfy the creeping U-turn condition.

13. A vehicle, comprising:
a vehicle body, an Electronic Stability Control, ESC system, a processor, a memory communicatively connected to the processor, and a communication interface for interacting with other devices;
wherein:
the memory stores computer-executable instructions; and
the processor executes the computer-executable instructions stored in the memory to implement the vehicle U-turn control method according to claims 1 to 6.

14. A computer-readable storage medium, wherein computer-executable instructions are stored in the computer-readable storage medium, and the computer-executable instructions, when executed by a processor, are configured to implement the vehicle U-turn control method according to any one of claims 1 to 6.

15. A chip, wherein the chip comprises a memory and a processor, the memory stores codes and data, the memory is coupled to the processor, and the processor runs a program in the memory so as to enable the chip to execute the vehicle U-turn control method according to any one of claims 1 to 6.

16. A program product, comprising a computer program, and when the program product is run on a computer, the computer is enabled to execute the vehicle U-turn control method according to any one of claims 1 to 6.

17. A computer program, wherein the computer program, when executed by a processor, is configured to execute the vehicle U-turn control method according to any one of claims 1 to 6.
